# EUROPEAN PATENT APPLICATION

(11) **EP 4 620 730 A1**
(43) Date of publication of application: **24.09.2025**
(21) Application number: 24165593.5
(22) Date of filing: 22.03.2024
(51) Int. Cl.: B60N 2/02, B60N 2/22, B60N 2/427, B60N 2/70, B60R 21/207

(54) **AN ANTI-SUBMARINING SYSTEM TO BE USED IN A VEHICLE SEAT AND THE USE OF SUCH SYSTEM**

(71) Applicant: Autoliv Development AB, 447 83 Vårgårda (SE)
(72) Inventor: Ljiljanic, Marko, 447 83 Vårgårda (SE); Knutsson, Stefan, 447 83 Vårgårda (SE); Riess, Alexander, 447 83 Vårgårda (SE); Svensson, Carl-Johan, 447 83 Vårgårda (SE); Sandinge, Par, 447 83 Vårgårda (SE); Henriksson, Ola, 447 83 Vårgårda (SE); Kjell, Fredrik, 447 83 Vårgårda (SE); Svensson, Robert, 447 83 Vårgårda (SE); Berntsson, Mats, 447 83 Vårgårda (SE); Hagg, Mikaela, 447 83 Vårgårda (SE); Karlsson, Hanna, 447 83 Vårgårda (SE); Gustafsson, Pontus, 447 83 Vårgårda (SE)
(74) Representative: AWA Sweden AB

(57) **Abstract**

An anti-submarining system (10) to be used in a vehicle seat (20) is provided. The system comprises at least one web (11) and a web tensioner (12) coupled to the at least one web (11). The at least one web (11) is configured to be arranged to extend between two opposing structural seat components (21). The at least one web (11) is configured to be arranged inside the seat (20) in a position between a spring structure (23) and an exterior upholstery (24) of the vehicle seat (11). The web tensioner (11) is configured to set the at least one web (11) from a slacked condition to a tensioned condition in response to an activation signal, whereby the thus tensioned web (11) forms a reaction surface (5) configured to limit or induce a displacement of a seated passenger's body (50).

## Description

### TECHNICAL FIELD

The invention refers to an anti-submarining system to be used in a vehicle seat and the use of such system in a vehicle seat.

### BACKGROUND

A vehicle seat in a modern passenger vehicle incorporates a multitude of features relating to either comfort or safety. Features relating to comfort may be the cushioning and the spring structure of the seat as well as features allowing the seat to be adjusted in position, for example the leaning back of the seat back.

Meanwhile, the most recognizable safety feature in a vehicle seat is the seat belt. The seat belt functions as a reaction surface, such as to restrain a passenger in the event of a collision. Hence, it is key that the seat belt engages with portions of the passenger's body which are able to absorb the usually very large forces in effect during a collision event. One such portion of the human body is the pelvic bone to which the lower strap of a three-point seat belt is arranged to engage.

The cushioning provided as comfort may influence where the seat belt ultimately engage with the passenger's body during a collision event. A phenomenon known as sinking-down or submarining may occur during the collision, where the cushioning of the vehicle seat allows the passenger's pelvic bone to be displaced vertically downwards and under the lower strap of the seat belt such that the lower strap instead engages with the abdomen of the passenger, a portion of the human body much less suitable for absorbing collision forces. Further to this, a seat back with a large inclination backwards will further promote submarining as the back lean of the seat back will cause an unfavourable rotation of the torso and pelvic bone relative to the collision forces. The trend towards autonomous or semi-autonomous vehicles is expected to cause more injuries of the latter type since especially the driver no longer need to have the same focus on the road and thereby can incline the seat into a more relaxing position.

The risks of submarining may be reduced considerably if the cushioning, spring structure and the ability to incline the seat back was removed. This would however reduce comfort which is often not an option for an everyday passenger vehicle. Ultimately, there exists a trade-off between safety and comfort where increased comfort in some circumstances reduces safety and vice versa. Hence, there is a need for new technology which allows comfort while reducing negative impacts on safety.

### SUMMARY

It is an object of the present invention to provide an anti-submarining system which reduces the risks for submarining associated with comfort features such as seat cushioning, spring structures and/or the leaning back of the seat back.

The anti-submarining system should be integrated to the inside of a vehicle seat.

The anti-submarining system should not impede comfort unless activated.

The anti-submarining should help the passenger to maintain or achieve a body position in which the risk of submarining is reduced.

These and other objects will be apparent from the following summary, description and appended claims.

According to an aspect of the present invention, there is provided an anti-submarining system to be used in a vehicle seat comprising:
at least one web and a web tensioner coupled to the at least one web, wherein
the at least one web is configured to be arranged to extend between two opposing structural seat components; and
wherein the at least one web is configured to be arranged inside the seat in a position between a spring structure and an exterior upholstery of the vehicle seat; and
wherein the web tensioner is configured to set the at least one web from a slacked condition to a tensioned condition in response to an activation signal, whereby the thus tensioned web forms a reaction surface that is configured to limit or induce a displacement of a seated passenger's body.

Accordingly, an anti-submarining system is provided which may be integrated to the inside of a vehicle seat in a position between a spring structure and an exterior upholstery of the vehicle seat, i.e., the outermost layer of a seat. The anti-submarining system may be positioned between the upholstery and the seat cushioning, in so limiting the amount of resilient material between the web and the body of a seated passenger.

The slacked condition of the anti-submarining system prior to its activation allows the integration of the anti-submarining system to be performed without impairing on comfort.

The web may extend in a non-linear fashion between two opposing structural seat components when in its slacked condition. The provided anti-submarining system is able to achieve a stiffening of the seat upon an activation, where the activation causes a tensioning of the web. The tensioned web will constitute a reaction surface inside the seat which in turn provides a stiffening of the seat. Said achieved stiffening limits a passenger's body displacement during a collision event. This in turn reduces the risk of an unfavourable body position relative to the seat belt i.e. submarining. The meaning of an unfavourable position pertains to a positioning of the pelvic bone of the passenger wherein the reaction surface provided by the seat belt does not engage the area of the pelvic bones.

The resilience in the seat provided by the cushioning and the spring structure is effectively reduced upon tensioning of the at least one web. The web extends linearly between the two opposing structural seat components when in its tensioned condition. Further to limiting a passenger's body displacement during a collision event, the provided anti-submarining system may promote a displacement of the passenger's body into a more favourable position. A favourable position, as opposed to an unfavourable position, is one where the positioning of the pelvic bones of the passenger is such that the reaction surface provided by the seatbelt engage the area of the pelvic bones. The web may be arranged in the seat back or in the seat pan. One and the same vehicle seat may be provided with one arrangement in the seat back and one in the seat pan. The skilled person understands that the two positions have a direct impact on the body displacement and the hence the load to the pelvic bones. When arranged in the seat back, a tensioning of the web will cause a forward pivoting movement of the passenger's upper body in a direction towards a more upright position. When arranged in the seat pan, the body will be slightly lifted into a more upright position. In both conditions, the likeliness for the lower strap of the three-point seat belt to engage the pelvic bones rather than the abdomen is increased.

In some embodiments the at least one web may be configured to be fixedly connected to each of the two opposing structural seat components. The two opposing structural seat components may be two seat back side structures of a seat back of a vehicle seat. Alternatively, the two opposing structural seat components may be two opposing seat pan side structures of a seat pan of the vehicle seat, or two cross members extending between the two seat pan side structures. No matter if the two opposing structural seat components are parts of the seat back or the seat pan, they may be appreciated to be substantially parallel with one another.

In other embodiments, the at least one web may be configured to be fixedly connected to one of the two opposing structural seat components and to partially and slidably encircle the second of the two opposing structural seat components. In embodiments where the at least one web is configured to partially and slidably encircle the second of the two opposing structural seat components, the at least one web may be further configured to be fixedly connected a suitable anchor point. The anchor point allows the web to achieve a tensioned state between its fixed connection to the first structural seat component and the anchor point while it partly and slidably encircles the second of the two opposing structural seat components. The skilled person realize that the suitable anchor point may be any structural component of a vehicle or a vehicle seat.

In yet another embodiment, the at least one web may be configured to partially and slidably encircle both of the two opposing structural seat components. In embodiments where the at least one web is configured to partially and slidably encircle both of the two opposing structural seat components, the at least one web may further be configured to be fixedly connected to a suitable anchor point. The anchor point allows the web to achieve a tensioned state between the two anchor points as it partly and slidably encircles the two opposing structural seat components. Again, the skilled person realizes that the suitable anchor points may be any structural component of a vehicle or a vehicle seat. In some embodiments wherein the at least one web is configured to partially and slidably encircle both of the two opposing structural seat components, two opposing ends of the web may be configured to connect to one another as the web loops around the two structural seat components of the seat. Preferably, in such embodiments, the two opposing ends of the web are connected to one another via the web tensioner.

In a preferred embodiment, the at least one web is comprised of a substantially stiff, non-woven or woven material.

The two opposing structural seat components may be two seat back side structures of a seat back of a vehicle seat, and the at least one web may be configured to be arranged in an upper portion of the seat back such that it assumes a position in level with an area of the seat back associated with receiving the thoracic spine portion of a back of a seated person. This positioning of the at least one web is favourable as it allows the activation of the anti-submarining system to induce a displacement of a seated passenger's body into a more favourable position. Worded differently, the positioning allows the reaction surface provided by the tensioned web to thrust the passengers upper body forward into a more upright position. Consequently, an associated rotation of the passenger's hips and torso facilitates the pelvic bone of the passenger to engage with the lower strap of the seatbelt, whereby the risk of submarining is reduced. In embodiments where the at least one web is configured to be arranged in an upper portion of the seat back, the web tensioner may be further configured to be activatable only when the seat back is determined to be inclined more than 45 degrees relative to a vertically upraised position of the seat back. Thereby, a passenger with an already sufficiently upright body position in order to avoid submarining would not be subject to the aforementioned induced displacement of the passenger's body.

The two opposing structural seat components may alternatively be two opposing seat pan side structures of a seat pan of a vehicle seat or two cross members extending between two seat pan side structures. In some embodiments the at least one web may be configured to be fixedly connected to a front seat pan cross member, and to slidably and partially encircle a rear seat pan cross member. Alternatively, the at least one web may be configured to be fixedly connected to a rear seat pan cross member, and to slidably and partially encircle a front seat pan cross member. In such embodiments, the at least one web may be further configured to be fixedly connected to a suitable anchor point. The anchor point allows the web to achieve a tensioned state between its fixed connection to either front or rear seat pan cross member and the anchor point while it partly and slidably encircles either the front or rear seat pan cross member. The skilled person realizes that the suitable anchor point may be any structural component of a vehicle or vehicle seat.

In other embodiments, the at least one web may be configured to be fixedly connected to the front seat pan cross member via its first and second ends while the web slidably and partially encircles the rear seat pan cross member. Alternatively, the at least one web may be configured to be fixedly connected to the rear seat pan cross member via its first and second ends while the web slidably and partially encircles the front seat pan cross member.

The tensioning device may be configured to be fixedly connected to the front cross member or to the rear cross member.

In embodiments wherein the two structural seat components are two seat pan cross members, the at least one web may be one web with a width of at least 5 cm, preferably within a range of 10-50 cm or two or more webs with a combined width of at least 5 cm, preferably within a range of 10-50 cm. The at least one web may further be configured to be arranged substantially in line with and below the femurs of a seated person. This arrangement of the at least one web ensures that the reaction surface provided upon the tensioning of the at least one web engages the ischium bones of a seated passenger. Similarly, in embodiments where the two opposing structural seat components are two seat pan side structures, the at least one web may be configured to be arranged in a rear portion of the seat pan, such that the at least one web is arranged in an area associated with receiving the ischium bones of a seated person. By having the web arranged in a portion of the seat pan associated with receiving the ischium bones of a passenger, the reaction surface formed by the tensioning of the web can directly engage the area of the ischium bone of the passenger. Thereby an effective stiffening of the seat pan is achieved by the reaction surface formed by the activation of the anti-submarining system. The activation of the anti-submarining system may further induce a displacement of a seated passenger's body upwardly into a more favourable position. Worded differently, the reaction surface provided by the tensioning of the web may thrust the passengers upper body upwardly, such that the lower strap of the seat belt more effectively engages the area across the pelvis of the passenger and thereby avoiding submarining.

The anti-submarining system may comprise at least two webs, and the at least two webs may be coupled to a common web tensioner. Alternatively, each of the at least two webs may be provided with its own web tensioner. No matter embodiment, the web tensioner may be a linear tensioner or a rotary tensioner.

The anti-submarining systems of the embodiments described above may further comprise an inflatable airbag provided separate from and above the at least one web.

According to a second aspect, the invention refers to a use of an anti-submarining system of the type described above in a vehicle seat. The vehicle seat may be arranged in a passenger vehicle, but it may also be a bus, a truck or a lorry. The features and functionality of the anti-submarining system have been thoroughly described above and are equally applicable when the anti-submarining system is used vehicle seat. Reference is made to the sections above to avoid undue repetition.

Further objects and advantages of the present invention will be obvious to a person skilled in the art reading the detailed description given below describing different embodiments.

### BRIEF DESCRIPTION OF THE DRAWINGS

The invention will be described in detail with reference to the schematic drawings.
Fig. 1A discloses highly schematically a vehicle seat provided with one anti-submarining system extending between two seat back side structures, and one anti-submarining system extending between two seat pan side structures.
Fig. 1B discloses highly schematically an example embodiment of the anti-submarining system when in a slacked condition.
Fig. 1C discloses highly schematically an example embodiment of the anti-submarining system when in a tensioned condition.
Fig. 2A discloses an example embodiment of the anti-submarining system.
Fig. 2B discloses an example embodiment of the anti-submarining system.
Fig. 2C discloses an example embodiment of the anti-submarining system.
Fig. 2D discloses an example embodiment of the anti-submarining system.
Fig. 3 discloses highly schematically a vehicle seat provided with an anti-submarining system extending between two seat pan cross-members.
Fig. 4A discloses an example embodiment of the anti-submarining system.
Fig. 4B discloses and example embodiment of the anti-submarining system.
Fig. 5 discloses, highly schematically, one example of an unfavourable position.
Fig. 6 shows one example, highly schematically, where an anti-submarining system is arranged in the seat pan of the seat.
Fig. 7 shows one example, highly schematically, where an anti-submarining system is arranged in the seat back.

### DETAILED DESCRIPTION

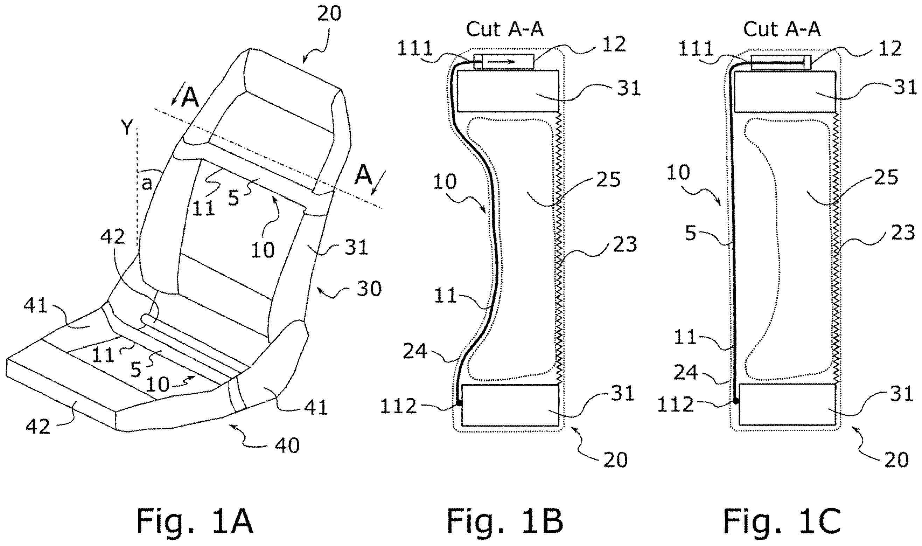

Beginning with Fig. 1A, an anti-submarining system 10 to be used in a vehicle seat 20 is shown. The vehicle seat is shown without common elements such as spring structure, cushioning or upholstery to improve understanding. The anti-submarining system 10 is configured to be arranged between two structural seat components. The two opposing structural seat components may be two seat back side structures 31 of a seat back 30 of a vehicle seat 20. Alternatively, the two opposing structural seat components may be two opposing seat pan side structures 41 of a seat pan 40 of the vehicle seat 20. No matter if the two opposing structural seat components are parts of the seat back 30 or the seat pan 40, they may be appreciated to be substantially parallel with one another.

Next, in Fig. 1B, the anti-submarining system 10 is disclosed to comprise a web 11 having two opposing ends 111, 112. A web tensioner 12 is coupled to one of the ends 111 of the web 11. The web tensioner 12 may be a linear tensioner or a rotary tensioner. These two types of tensioners are as such well known to the skilled person and are not further described. At least the linear tensioner may be a pyrotechnically activated tensioner.

The web 11 is comprised of a stiff flexible material. Preferably, a non-woven or woven material is used.

The web 11 may be a single continuous sheet. Alternatively, the anti-submarining system 10 may comprise more than one web 11 (not shown). In the event of more than one web 11, the webs may optionally be interconnected via cross connections.

The web 11 is configured to be arranged to extend between the two opposing structural seat components, here exemplified by two seat back side structures 31. The web 11 is further configured, in its ordinary use, to extend between the two opposing structural seat components 21 in a slacked condition. Hence, the web 11 extends in a non-linear fashion between two opposing structural seat components 21 when in its slacked condition. The slacked condition of the web 11 prior to its activation allows the integration of the anti-submarining system 10 into the seat 20 without impairing on the comfort of the seat 20. The web 11 is configured to be arranged inside the seat 20 in a position between a spring structure 23 and an exterior upholstery 24 of the vehicle seat 20.

Fig. 1B discloses an example where the web 11 may be configured to be positioned between the upholstery 24 and a seat cushioning 25, in so limiting the amount of resilient material between the web 11 and the body of a seated passenger (not shown). However, the anti-submarining system 10 may be configured to be placed elsewhere in relation to said cushioning as long as said position is between the spring structure 23 and the exterior upholstery 24 of the vehicle seat 20, for example between the spring structure 23 and the cushioning 25 of the seat 20.

The web tensioner 12 is configured to set the at least one web 11 from a slacked condition, as shown in Fig. 1B, to a tensioned condition in response to an activation signal. The activation signal may be a signal generated upon a detection of an emergency situation, such as a crash situation.

Fig. 1C discloses the web 11 in its tensioned condition where the web 11 extends linearly between the two opposing structural seat components 21. When in the tensioned condition, all, or substantially all slack of the web has been removed by the web tensioner 12. The thus tensioned web 11 will constitute a reaction surface 5 inside the seat 20 which in turn provides a stiffening of the seat 20. Said achieved stiffening limits a passenger's body displacement during a collision event, as will be described later.

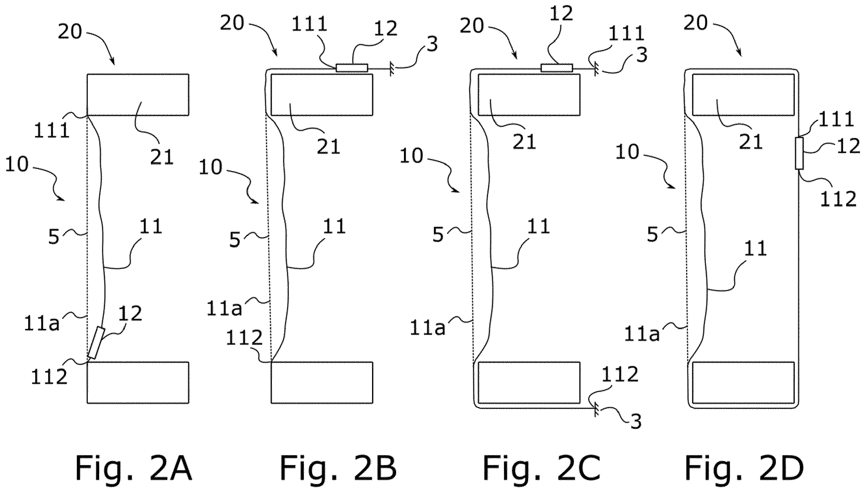

Now turning to Fig. 2A, an embodiment is disclosed highly schematically wherein the web 11 is configured to be fixedly connected to each of two opposing structural seat components 21 of a vehicle seat 20 by two of its ends 111, 112.

While the seat 20 is shown without common elements such as spring structure, cushioning or exterior upholstery to improve clarity, it is to be understood that the web 11 is configured to be arranged between the upholstery and the spring structure of the seat 20 analogous to the embodiment described in Figs. 1B.

The structural components 21 may be two seat back side structures of a seat back of the vehicle seat. Alternatively, the two opposing structural seat components 21 may be two opposing seat pan side structures of a seat pan of the vehicle seat 20. No matter if the two opposing structural seat components 21 are parts of the seat back or the seat pan, they may be appreciated to be substantially parallel with one another.

One of two ends 112 of the web 11 is configured to be connected to its corresponding structural component 21 via a web tensioner 12. The web tensioner 12 is configured to set the at least one web 11 from a slacked condition to a tensioned condition in response to an activation signal, such that a tensioned web 11a is achieved.

The activation signal may be a signal generated upon a detection of an emergency situation, such as a crash situation.

In its tensioned condition the web 11a extends linearly between the two opposing structural seat components 21. When in the tensioned condition, all, or substantially all slack of the web 11 has been removed by the web tensioner 12. The thus tensioned web 11a will constitute a reaction surface 5 inside the seat 20 which in turn provides a stiffening of the seat 20. Said achieved stiffening limits a passenger's body displacement during a collision event, as will be described later.

Next, Fig. 2B discloses, highly schematically, an embodiment where one of the ends 112 of the web 11 is configured to be fixedly connected to one of the two opposing structural seat components 21 of the seat 20 and to slidably and partially encircle the second of the two opposing structural seat components 21 of the seat 20. The meaning of slidingly and partially encircle in this regard aim in describing that the web 11 is not wrapped around, i.e. does not complete a full lap around the structural seat component 21, and that the web is configured to enable its sliding relative to the structural seat component 21.

While the seat 20 is shown without common elements such as spring structure, cushioning or upholstery to improve clarity, it is to be understood that the web 11 is configured to be arranged between the upholstery and the spring structure of the seat 20 analogous to the embodiment described in Figs. 1A-C.

The structural components 21 may be two seat back side structures of a seat back of the vehicle seat. Alternatively, the two opposing structural seat components 21 may be two opposing seat pan side structures of a seat pan of the vehicle seat 20. No matter if the two opposing structural seat components 21 are parts of the seat back or the seat pan, they may be appreciated to be substantially parallel with one another.

The second opposing end 111 of the web 11 is configured to be fixedly connected a suitable anchor point 3 via a web tensioner 12. The web tensioner 12 is configured to set the at least one web 11 from a slacked condition to a tensioned condition in response to an activation signal, such that a tensioned web 11a is achieved. The activation signal may be a signal generated upon a detection of an emergency situation, such as a crash situation.

In its tensioned condition the web 11a extends linearly between the two opposing structural seat components 21. When in the tensioned condition, all, or substantially all slack of the web 11 has been removed by the web tensioner 12. The thus tensioned web 11a will constitute a reaction surface 5 inside the seat 20 which in turn provides a stiffening of the seat 20. Said achieved stiffening limits a passenger's body displacement during a collision event, as will be described later.

The anchor point 3 allows the web 11 to achieve a tensioned state between its fixed connection to the first structural seat component 21 and the anchor point 3 while it partly and slidably encircles the second of the two opposing structural seat components 21. The skilled person realizes that the suitable anchor point 3 may be any structural component of a vehicle, for example a structural floor component or a pillar of a vehicle body. Alternatively, the anchor point 3 may be a structural seat component 21.

Turning to Fig 2C and 2D, two further embodiments are shown, highly schematically, wherein the at least one web 11 is configured to partially and slidably encircle both of the two opposing structural seat components 21.

In Fig 2C, the at least one web 11 is configured to partially and slidably encircle two opposing structural seat components 21 of a vehicle seat 20. The meaning of slidingly and partially encircle in this regard aim in describing that the web 11 is not wrapped around, i.e., does not complete a full lap around the structural seat component 21, and that the web is configured to enable its sliding relative to the structural seat component 21.

While the seat 20 is shown without common elements such as spring structure, cushioning or upholstery to improve clarity, it is to be understood that the web 11 is configured to be arranged between the upholstery and the spring structure of the seat 20 analogous to the embodiment described in Figs. 1A-C.

The structural components 21 may be two seat back side structures of a seat back of the vehicle seat. Alternatively, the two opposing structural seat components 21 may be two opposing seat pan side structures of a seat pan of the vehicle seat 20. No matter if the two opposing structural seat components 21 are parts of the seat back or the seat pan, they may be appreciated to be substantially parallel with one another.

Two opposing ends 111, 112 of the web 11 are configured to be fixedly connected to suitable anchor points 3. One of the two ends 111 is connected to its corresponding anchor point 3 via the web tensioner 12.

The web tensioner 12 is configured to set the at least one web 11 from a slacked condition to a tensioned condition in response to an activation signal, such that a tensioned web 11a is achieved. The activation signal may be a signal generated upon a detection of an emergency situation, such as a crash situation.

In its tensioned condition the web 11a extends linearly between the two opposing structural seat components 21. When in the tensioned condition, all, or substantially all slack of the web 11 has been removed by the web tensioner 12. The thus tensioned web 11a will constitute a reaction surface 5 inside the seat 20 which in turn provides a stiffening of the seat 20. Said achieved stiffening limits a passenger's body displacement during a collision event, as will be described later.

The anchor point 3 allows the web 11 to achieve a tensioned state between its fixed connection to the first structural seat component 21 and the anchor point 3 while it partly and slidably encircles the second of the two opposing structural seat components 21. The skilled person realizes that the suitable anchor point 3 may be any structural component of a vehicle, for example a structural floor component or a pillar of a vehicle body. Alternatively, the anchor point 3 may be a structural seat component 21.

Fig 2D, discloses an embodiment wherein the at least one web 11 is configured to partially and slidably encircle two opposing structural seat components 21 of a vehicle seat 20. The meaning of slidingly and partially encircle in this regard aim in describing that the web 11 is not wrapped around, i.e. does not complete a full lap around the structural seat component 21, and that the web is configured to enable its sliding relative to the structural seat component 21.

While the seat 20 is shown without common elements such as spring structure, cushioning or upholstery to improve clarity, it is to be understood that the web 11 is configured to be arranged between the upholstery and the spring structure of the seat 20 analogous to the embodiment described in Figs. 1A-C.

The structural components 21 may be two seat back side structures of a seat back of the vehicle seat. Alternatively, the two opposing structural seat components 21 may be two opposing seat pan side structures of a seat pan of the vehicle seat 20. No matter if the two opposing structural seat components 21 are parts of the seat back or the seat pan, they may be appreciated to be substantially parallel with one another.

Two opposing ends 111, 112 of the web 11 are configured to connect to one another via the web tensioner 12 as the web 11 loops around the two structural seat components 21 of the seat 20.

The web tensioner 12 is configured to set the at least one web 11 from a slacked condition to a tensioned condition in response to an activation signal, such that a tensioned web 11a is achieved. The activation signal may be a signal generated upon a detection of an emergency situation, such as a crash situation.

In its tensioned condition the web 11a extends linearly between the two opposing structural seat components 21. When in the tensioned condition, all, or substantially all slack of the web 11 has been removed by the web tensioner 12. The thus tensioned web 11a will constitute a reaction surface 5 inside the seat 20 which in turn provides a stiffening of the seat 20. Said achieved stiffening limits a passenger's body displacement during a collision event, as will be described later.

Returning to Fig. 1A, it is disclosed that a seat 20 may be provided with one anti-submarining system 10 in the seatback 30 and one anti-submarining system 10 in the seat pan 40. In other embodiments a seat 20 may be provided with only one anti-submarining system in either the seat back 30 or the seat pan 40.

Fig. 1A further discloses that the at least one web 11 may be configured to be arranged in an upper portion of the seat back 30 such that it assumes a position in level with an area of the seat back 30 associated with receiving the thoracic spine portion of a back of a seated person (not shown). This positioning of the at least one web 11 is preferred as it allows the activation of the anti-submarining system to induce a displacement of a seated passenger's body into a more favourable position as will be described later.

In embodiments where the at least one web is configured to be arranged in the seat back, the web tensioner may be further configured to be activatable only when the angle (a) of the seat back 30 is determined to be greater than 45 degrees relative to a vertically fully upraised position Y of the seat back 30.

Fig. 1A further discloses that a web 11 may be arranged in a rear portion of the seat pan 40, such that the at least one web 11 is arranged in an area associated with receiving the ischium bones of a seated person. By having the web 11 arranged in a portion of the seat pan 40 associated with receiving the ischium bones of a passenger, the reaction surface 5 formed by the tensioning of the web 11 can engage the area below the ischium bone of the passenger and thereby reduce the sinking down of the passengers body. An effective stiffening of the seat pan 40 is accordingly achieved by the reaction surface 5 formed by the activation of the anti-submarining system 10. Said achieved stiffening limits a passenger's body displacement during a collision event, as will be described later.

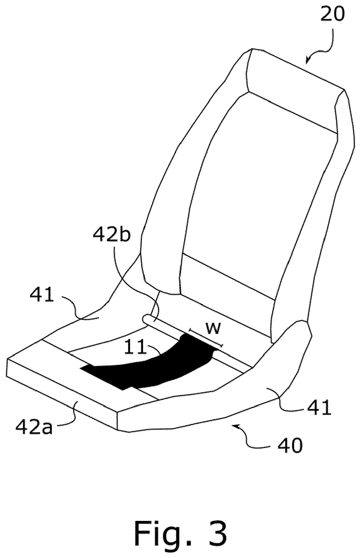

Now turning to Fig. 3 an embodiment of the anti-submarining system is disclosed, highly schematically. The web 11 is configured to extend between two seat pan cross members 42a, 42b extending between the two seat pan side structures 41 of a vehicle seat 20. While the seat 20 is shown without common elements such as spring structure, cushioning or upholstery to improve clarity, it is to be understood that the web 11 is configured to be arranged between the upholstery and the spring structure of the seat 20 analogous to the embodiment described in Figs. 1A-C.

In embodiments wherein the two structural seat components are two seat pan cross members 42a, 42b, the at least one web 11 may be one web with a width w of at least 5 cm, preferably within a range of 10-50 cm. Alternatively, it may be two or more webs 11 with a combined width w of at least 5 cm, preferably within a range of 10-50 cm. The at least one web 11 is disclosed as being arranged in an area of the seat pan 40 substantially in line with and below the femurs of a seated person (not shown). This arrangement of the at least one web 11 ensures that the reaction surface 5 provided upon the tensioning of the at least one web 11 is formed in an area below the ischium bones of a seated passenger. Thereby an effective stiffening of the seat pan 40 is achieved by the reaction surface 5 formed by the activation of the anti-submarining system 10. Said achieved stiffening limits a passenger's body displacement during a collision event, as will be described later. The reaction surface limits sinking down of the body in a direction towards the seat pan.

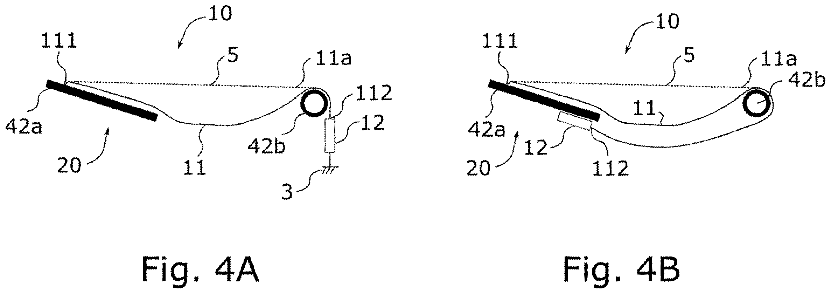

Next, Fig. 4A and 4B disclose two, highly schematic, examples where the web 11 extends between two seat pan cross members 42a, 42b of a vehicle seat 20. While the seat 20 is shown without common elements such as spring structure, cushioning or upholstery to improve clarity, it is to be understood that the web 11 in both embodiments is configured to be arranged between the upholstery and the spring structure of the seat 20 analogous to the embodiment described in Figs. 1A-C.

In Fig 4A, the at least one web 11 is disclosed as being fixedly connected to the front seat pan cross member 42a via its first end 111, and to slidably and partially encircle the rear seat pan cross member 42b via its second end 112. The meaning of slidingly and partially encircle in this regard aim in describing that the web 11 is not wrapped around, i.e., does not complete a full lap around the structural rear seat pan cross member 42b, and that the web is configured to enable its sliding relative to the rear seat pan cross member 42b.

The second end 112 of the at least one web 11 is configured to be fixedly connected to a suitable anchor point 3 via the web tensioner 12. The web tensioner 12 is configured to set the at least one web 11 from a slacked condition to a tensioned condition in response to an activation signal, such that a tensioned web 11a is achieved. The activation signal may be a signal generated upon a detection of an emergency situation, such as a crash situation.

In its tensioned condition the web 11a extends linearly between the front 42a and rear 42b seat pan cross members. When in the tensioned condition, all, or substantially all slack of the web 11 has been removed by the web tensioner 12. The thus tensioned web 11a will constitute a reaction surface 5 inside the seat 20 which in turn provides a stiffening of the seat 20. Said achieved stiffening limits a passenger's body displacement during a collision event, as will be described later.

The anchor point 3 allows the web 11 to achieve said tensioned state between its fixed connection to the front seat pan cross member 42a and the anchor point 3 while it partly and slidably encircles the rear seat pan cross member 42b. The skilled person realizes that the suitable anchor point 3 may be any structural component of a vehicle, for example a structural floor component or a pillar of a vehicle body. Alternatively, the anchor point 3 may be a structural seat component.

The second embodiment, shown in Fig. 4B, discloses, highly schematically, that the at least one web 11 may be configured to be fixedly connected to the front seat pan cross member 42a by a first end 111 of its two opposing ends 111, 112. The web slidably and partially encircles the rear seat pan cross member 42b and then connects to the front seat pan cross member 42a again at the second end 112 of the two opposing ends 111, 112 via the tensioning device 12. The meaning of slidingly and partially encircle in this regard aim in describing that the web 11 is not wrapped around, i.e., does not complete a full lap around the structural rear seat pan cross member 42b, and that the web is configured to enable its sliding relative to the rear seat pan cross member 42b.

The tensioning device is disclosed as being arranged on a lower surface of the front seat pan cross member 42a. The web tensioner 12 is configured to set the at least one web 11 from a slacked condition to a tensioned condition in response to an activation signal, such that a tensioned web 11a is achieved. The activation signal may be a signal generated upon a detection of an emergency situation, such as a crash situation.

In its tensioned condition the web 11a extends linearly between the front 42a and rear 42b seat pan cross members. When in the tensioned condition, all, or substantially all slack of the web 11 has been removed by the web tensioner 12. The thus tensioned web 11a will constitute a reaction surface 5 inside the seat 20 which in turn provides a stiffening of the seat 20. Said achieved stiffening limits a passenger's body displacement during a collision event, as will be described later.
Next, the overall function of the anti-submarining system will be disclosed.
The primary purpose of the anti-submarining system is to at least limit, i.e., reduce, a displacement of a passenger's body, during a collision event, such that it does not assume an unfavourable position relative to the lower strap of the seat belt. The anti-submarining system may further induce a displacement of the passenger's body into a more favourable position.

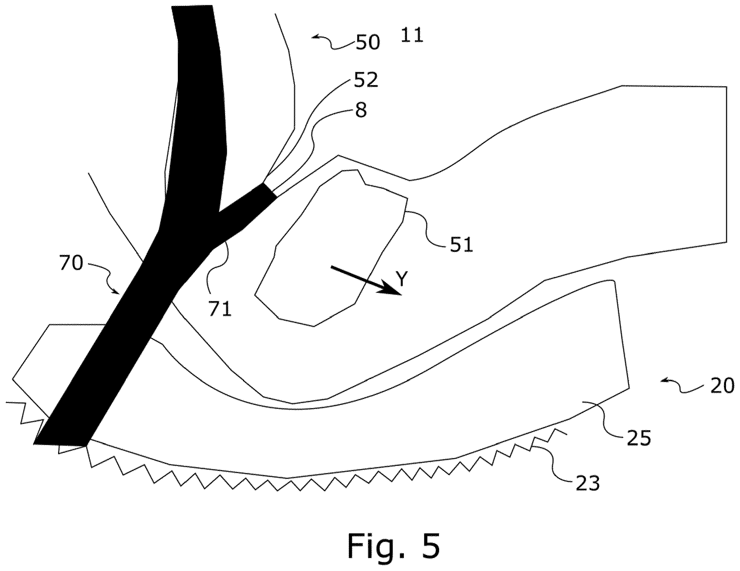

Fig. 5 shows, highly schematically, one example of an unfavourable position which, as opposed to a favourable position, is one where the positioning of the pelvic bone 51 of the passenger 50 is such that the reaction surface 8 provided by the lower strap 71 of the seat seatbelt 70 engages the stomach area 52 of the passenger 50. An unfavourable position typically results from the resiliency of the cushioning 25 and spring structure 23 of the seat 20 which allow collision forces to displace Y the pelvic bone 51 of the passenger 50 downwards and under the lower strap 71 of the seat belt 70. An unfavourable position can also be the result of, or be strengthened, if the seat back has been angled into a more leaned back position.

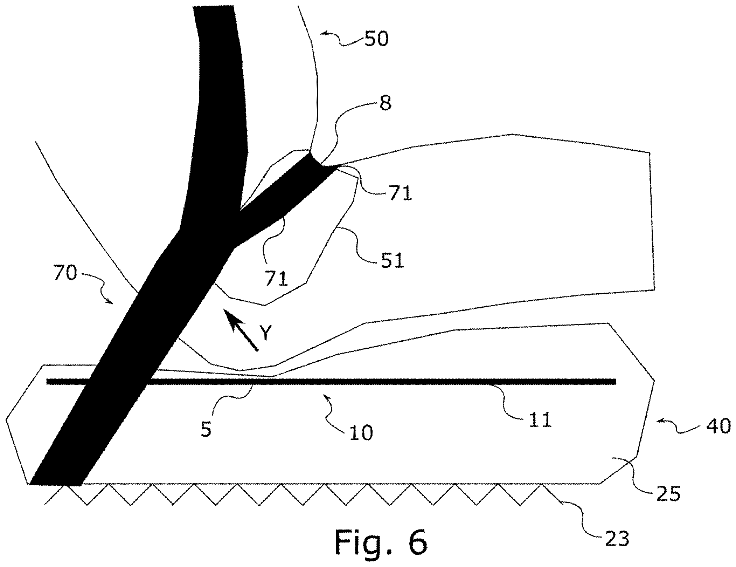

Fig. 6 shows, highly schematically, one example of a seat where an anti-submarining system 10 is arranged in the seat pan 40 of the seat. An effective stiffening of the seat pan 40, i.e. of the cushioning 25 and the spring structure 23, is achieved by the reaction surface 5 formed by the activation of the anti-submarining system 10, i.e. tensioning of the web 11. The activation of the anti-submarining system may further induce a displacement Y of the pelvic bone 51 of the passenger 50 upwardly into a more favourable position. The stiffening of the seat pan 40, and any upward displacement Y of the pelvic bone 51 reduces the risk of submarining as the pelvic bone 51 of the passenger 50 is hindered from being displaced downwardly and under the lower strap 71 of the seat belt 70. Hence, a favourable positioning can be maintained despite collision forces.

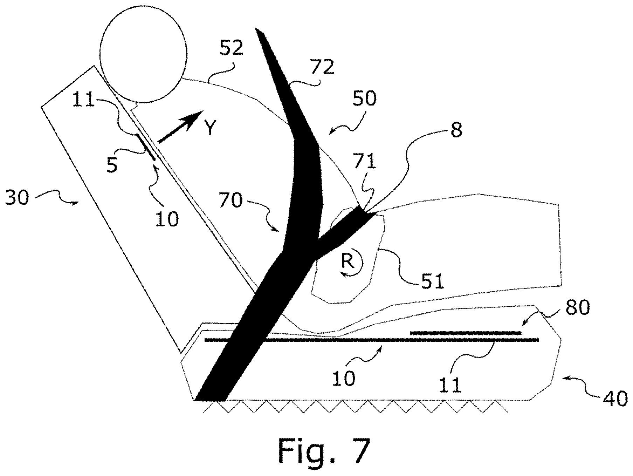

Next, Fig. 7 shows, highly schematically, a seat where an anti-submarining system 10 arranged in the seat back 30. A reaction surface 5 formed by the activation of the anti-submarining system, i.e. tensioning of the web 11, results in a displacement Y of the passengers upper body 52 forward into a more upright position. The more upright positioning of the upper body 52 of the passenger 50 has at least two effects. Firstly, as the upper body of the passenger 50 is displaced forward, the upper strap 72 of the seat belt 70 extending across the chest is able to absorb a larger portion of the collision forces. Thereby, the collision force contributing to a displacement of the passenger's 50 body into an unfavourable position is reduced. Secondly, the more upright positioning result in an associated rotation R of the passenger's pelvic bone 51, which thereby facilitates its engagement with the lower strap 71 of the seatbelt 70.

An anti-submarining system arranged in a seat back may work in tandem with an anti-submarining system arranged in the seat pan to further reduce the risk of submarining. Fig. 7 discloses, highly schematically, such system being arranged in the seat pan. The functionality of the latter has been described above with reference to Fig. 6.

Fig. 7 further discloses that the anti-submarining system 10 of the embodiments described above may further comprising an inflatable airbag 80 provided separate from and above the at least one web 11 in the seat pan 40.

It is realized by a person skilled in the art that features from various embodiments disclosed herein may be combined with one another to provide further alternative embodiments.

## Claims

1. An anti-submarining system (10) to be used in a vehicle seat (20), comprising:
at least one web (11) and a web tensioner (12) coupled to the at least one web (11), wherein
the at least one web (11) is configured to be arranged to extend between two opposing structural seat components (21); and
wherein the at least one web (11) is configured to be arranged inside the seat (20) in a position between a spring structure (23) and an exterior upholstery (24) of the vehicle seat (11); and
wherein the web tensioner (11) is configured to set the at least one web (11) from a
slacked condition to a tensioned condition in response to an activation signal,
whereby the thus tensioned web (11) forms a reaction surface (5) configured to limit or induce a displacement of a seated passengers body (50).

2. The anti-submarining system (10) according to claim 1, wherein the two opposing structural seat components (21) are two seat side structures (31, 41); or
wherein the two opposing structural seat components are two cross members (42) extending between the two seat side structures (31, 41).

3. The anti-submarining system (10) according to claim 1 or 2, wherein the at least one web (11) is configured to be fixedly connected to each of the two opposing structural seat components (21); or
wherein the at least one web (11) is configured to be fixedly connected to one of the two opposing structural seat components (21) and to partially and slidably encircle the second of the two opposing structural seat components (21); or
wherein the at least one web (11) is configured to partially and slidably encircle both of the two opposing structural seat components (21).

4. The anti-submarining system (10) according to any of the preceding claims, wherein the two opposing structural seat components (21) are two seat back side structures (31) of a seat back (30) of a vehicle seat (20); and wherein the at least one web is configured to be arranged in an upper portion of the seat back (30) such that it assumes a position in level with an area of the seat back (30) associated with receiving the thoracic spine portion of a back of a seated person (50).

5. The anti-submarining system (10) according to claim 4, wherein the web tensioner (12) is configured be activatable only when the seat back (30) is determined to be inclined more than 45 degrees relative to a vertically upraised position (Y) of the seat back (11).

6. The anti-submarining system (10) according to claim 3, wherein
the two opposing structural seat components (21) are two opposing seat pan side structures (41) of a seat pan (40) of the vehicle seat (20); or
wherein the two opposing structural seat components (21) are two cross members (42) extending between the two seat pan side structures (41).

7. The anti-submarining system (10) according to claim 6, wherein the two opposing structural seat components (21) are two seat pan cross members (42), and wherein the at least one web (11) is configured to be arranged substantially in line with and below the femur of a seated person (50).

8. The anti-submarining system (10) according to claim 7, wherein
the at least one web (11) is configured to be fixedly connected to a front seat pan cross member (42a), and to slidably and partially encircle a rear seat pan cross member (42b); or
wherein the at least one web (11) is configured to be fixedly connected to a rear seat pan cross member (42b), and to slidably and partially encircle a front seat pan cross member (42a).

9. The anti-submarining system (10) according to any of the preceding claims, wherein the at least one web (11) is one web (11) with a width of at least 5 cm, preferably within a range of 10-50 cm; or
wherein the at least one web (11) is two or more webs (11) with a combined width of at least 50 cm, preferably within a range of 10-50 cm.

10. The anti-submarining system (10) according to any of the claims 7-9 wherein the tensioning device (12) is configured to be fixedly connected to the front cross member (42a) or to the rear cross member (42b).

11. The anti-submarining system (10) according to claim 6, wherein the two opposing structural seat components (21) are two seat pan side structures (41), and wherein the at least one web (11) is configured to be arranged in a rear portion of the seat pan (40), such that the web is arranged in an area associated with receiving the ischium bones of a seated person (50).

12. The anti-submarining system (10) according any of the preceding claims, wherein the at least one web (11) is comprised of a substantially stiff, non-woven or woven material.

13. The anti-submarining system (10) according to any of the preceding claims, wherein the anti-submarining (10) comprises at least two webs (11), and wherein the at least two webs (11) are coupled to a common web tensioner (12).

14. The anti-submarining system (10) according to any of the preceding claims, wherein the web tensioner (12) is a linear tensioner or a rotary tensioner.

15. The anti-submarining system (10) according to any of the claims 9-14, further comprising an inflatable airbag (80) provided separate from and above the at least one web (11).

16. Use of the anti-submarining system (10) according to any of claims 1-15 in a vehicle seat (20).

## Amended claims

### Amended claims in accordance with Rule 137(2) EPC.

1. An anti-submarining system (10) to be used in a vehicle seat (20), the anti-submarining system comprising:
at least one web (11) and a web tensioner (12) coupled to the at least one web (11), wherein
the at least one web (11) is configured to be arranged to extend between two opposing structural seat components (21), wherein the two opposing structural seat components (21) are two seat back side structures (31) of a seat back (30) of a vehicle seat (20); and wherein the at least one web is configured to be arranged in an upper portion of the seat back (30) such that it assumes a position in level with an area of the seat back (30) associated with receiving the thoracic spine portion of a back of a seated person (50); and
wherein the at least one web (11) is configured to be arranged inside the seat (20) in a position between a spring structure (23) and an exterior upholstery (24) of the vehicle seat (11); and
wherein the web tensioner (11) is configured to set the at least one web (11) from a slacked condition to a tensioned condition in response to an activation signal, whereby the thus tensioned web (11) forms a reaction surface (5) configured to limit or induce a displacement of a seated passenger's body (50).

2. The anti-submarining system (10) according to claim 1, wherein the at least one web (11) is configured to be fixedly connected to each of the two opposing structural seat components (21); or
wherein the at least one web (11) is configured to be fixedly connected to one of the two opposing structural seat components (21) and to partially and slidably encircle the second of the two opposing structural seat components (21); or
wherein the at least one web (11) is configured to partially and slidably encircle both of the two opposing structural seat components (21).

3. The anti-submarining system (10) according to claim 1 or 2, wherein the web tensioner (12) is configured be activatable only when the seat back (30) is determined to be inclined more than 45 degrees relative to a vertically upraised position (Y) of the seat back (11).

4. The anti-submarining system (10) according to any of the preceding claims, wherein the at least one web (11) is one web (11) with a width of at least 5 cm, preferably within a range of 10-50 cm; or
wherein the at least one web (11) is two or more webs (11) with a combined width of at least 50 cm, preferably within a range of 10-50 cm.

5. The anti-submarining system (10) according any of the preceding claims, wherein the at least one web (11) is comprised of a substantially stiff, non-woven or woven material.

6. The anti-submarining system (10) according to any of the preceding claims, wherein the anti-submarining (10) comprises at least two webs (11), and wherein the at least two webs (11) are coupled to a common web tensioner (12).

7. The anti-submarining system (10) according to any of the preceding claims, wherein the web tensioner (12) is a linear tensioner or a rotary tensioner.

8. Use of the anti-submarining system (10) according to any of claims 1-7 in a vehicle seat (20).
